# EUROPEAN PATENT APPLICATION

(11) **EP 4 756 152 A1**
(43) Date of publication of application: **10.06.2026**
(21) Application number: 24851014.1
(22) Date of filing: 06.08.2024
(51) Int. Cl.: E04H 4/16, G05D 9/12

(54) **POOL CLEANING ROBOT AND CONTROL METHOD THEREFOR**

(30) Priority: 07.08.2023 CN 202310985495; 07.08.2023 CN 202322106136 U
(71) Applicant: WYBOTICS Co., LTD., Tianjin 300462 (CN)
(72) Inventor: HAN, Tang, Tianjin 300462 (CN); GENG, Cuixiao, Tianjin 300462 (CN); WANG, Youjiang, Tianjin 300462 (CN)
(74) Representative: Casalonga
(86) International application number: PCT/CN2024/110180
(87) International publication number: WO 2025/031369

(57) **Abstract**

The present disclosure discloses a pool cleaning robot and a control method therefor. The pool cleaning robot includes a robot body, a buoyancy adjustment unit, and a first driving unit. The buoyancy adjustment unit and the first driving unit are arranged on the robot body or connected to the robot body. The buoyancy adjustment unit is provided to enable the pool cleaning robot to move back and forth between a water surface and a liquid-submerged surface. When the pool cleaning robot floats up to the water surface under the action of the buoyancy adjustment unit, the first driving unit is configured to drive the pool cleaning robot to move on the water surface. The pool cleaning robot of the present disclosure is provided with the buoyancy adjustment unit, which can increase or decrease the weight of the pool cleaning robot, such that the pool cleaning robot automatically floats up or dives down. When the machine needs to float up to the water surface, the machine can automatically float without the need for manually searching for the machine and lifting the machine out of the water surface, thereby saving manual labor.

## Description

### CROSS REFERENCE TO RELATED APPLICATIONS

The present disclosure claims priority to Chinese Patent Application No. 202310985495.7, entitled "POOL CLEANING ROBOT AND CONTROL METHOD THEREFOR" and filed on August 7, 2023, and to Chinese Patent Application No. 202322106136.8, entitled "UNDERWATER CLEANING MACHINE" and filed on August 7, 2023, and the entire contents of the above two patent applications are incorporated herein by reference.

### TECHNICAL FIELD

The present disclosure relates to the field of underwater cleaning technology, and more particularly, to a pool cleaning robot and a control method therefor.

### BACKGROUND

Swimming pools may generate a lot of garbage during use and thus require regular cleaning. The existing swimming pools are usually cleaned by pool cleaning machines (also known as pool cleaning robots). However, after the pool cleaning machines complete the cleaning tasks, when filter boxes need to be cleaned or when the pool cleaning machines need repairs and maintenance, the pool cleaning machines need to stop operating and stay at the bottoms of the pools, and the pool cleaning machines need to be manually searched for and lifted out of the swimming pools, which takes a long time and has high labor costs.

### SUMMARY

Embodiments of the present disclosure provide a pool cleaning robot and a control method therefor, to solve the above problems existing in the prior art.

To solve the above technical problems, the present disclosure adopts following technical solutions. A pool cleaning robot includes a robot body, a buoyancy adjustment unit, and a first driving unit.

The buoyancy adjustment unit and the first driving unit are arranged on the robot body or connected to the robot body.

The buoyancy adjustment unit is provided to enable the pool cleaning robot to move back and forth between a water surface and a liquid-submerged surface.

When the pool cleaning robot floats up to the water surface under an action of the buoyancy adjustment unit, the first driving unit is configured to drive the pool cleaning robot to move on the water surface.

Further, the buoyancy adjustment unit includes a second driving unit, which includes a unidirectional water intake system and a unidirectional water drainage system. The unidirectional water intake system operates such that a liquid flows into the buoyancy adjustment unit to increase the weight of the pool cleaning robot. The unidirectional water drainage system operates such that the liquid drains out of the buoyancy adjustment unit to reduce the weight of the pool cleaning robot.

Further, the unidirectional water intake system and the unidirectional water drainage system are separately selected from any one of:
(1) a pump and a unidirectional valve arranged on a water intake/drainage pipeline of the pump; and
(2) the unidirectional pump.

Further, the first driving unit includes a power part and a driving part, where the power part is configured to supply power to the driving part, and the driving part is configured to generate a driving force for the pool cleaning robot to drive the pool cleaning robot to move on the water surface.

Further, the power part includes a motor, a connecting part, and a water propeller part. The motor is configured to transmit the power to the water propeller part by means of the connecting part.

Further, the water propeller part includes a rolling brush and/or a caterpillar track. Under the action of the power part, the rolling brush and/or the caterpillar track are operated on the water surface, such that a protrusion on the rolling brush and/or the caterpillar track moves on the water surface or in the water to generate a thrust force on the pool cleaning robot.

Further, the connecting part includes a driving wheel installed on an output shaft of the motor; and the rolling brush is provided with a rolling brush wheel directly or indirectly meshing with the driving wheel.

Driven by a travelling wheel of the pool cleaning robot, the caterpillar track is operated on the water surface to generate the thrust force on the pool cleaning robot, and the travelling wheel directly or indirectly meshes with the driving wheel.

Further, the power part includes a motor and an impeller connected to the motor, and the driving part includes a water outlet. The motor drives the impeller to operate, such that water drains out through the water outlet.

A component of water drainage through the water outlet in a horizontal direction generates the thrust force on the pool cleaning robot, to drive the pool cleaning robot to move on the water surface, where the horizontal direction refers to a direction of a plane where the water surface is located.

Further, the robot body includes a housing and a control unit connected to the housing.

The buoyancy adjustment unit is connected to the housing, and the buoyancy adjustment unit is electrically connected to the control unit.

The first driving unit is electrically connected to the control unit.

Further, the housing includes an upper housing and a lower housing, where the lower housing is provided with a water inlet, and the upper housing is located at a side opposite to the lower housing. When the pool cleaning robot floats on the water surface, at least a portion of the upper housing is exposed above the water surface. The water inlet is a water inlet of the pool cleaning robot.

Further, an end of the pool cleaning robot along a traveling direction thereof is a front end of the housing, and the buoyancy adjustment unit is arranged in a middle or at a rear end of the housing.

Further, the buoyancy adjustment unit includes an adjustment unit including a water storage tank shell, and a cavity is formed inside the water storage tank shell.

Under the action of the second driving unit, volume of space occupied by gas and/or liquid in the cavity changes, causing the pool cleaning robot to move back and forth between the water surface and the liquid-submerged surface.

The volume of the cavity remains unchanged.

Further, the changing of the volume of the space occupied by the gas and/or the liquid in the cavity under the action of the second driving unit includes any one or two of following cases where:
under the action of the second driving unit, the liquid is injected into the cavity, such that the volume of the space occupied by the gas decreases, the weight of the buoyancy adjustment unit increases, and thus the pool cleaning robot dives down to the liquid-submerged surface; and
the liquid drains out of the cavity, such that the volume of the space occupied by the gas increases, the weight of the buoyancy adjustment unit decreases, and thus the pool cleaning robot floats up to the water surface.

Further, each of the unidirectional water intake system and the unidirectional water drainage system includes at least one driving component and at least two transmission parts.

At least one transmission part of the at least two transmission parts connects the driving component to the cavity; and
at least one transmission part connects the driving component to outside.

Further, the second driving unit is arranged in a sealed compartment, where the sealed compartment is hermetically connected to the adjustment unit by means of a sealing element; or
the second driving unit is arranged inside a sealed box and is connected to the cavity of the adjustment unit through a pipeline, and a sealing structure is provided at a joint of the pipeline.

Further, the sealing element includes a sealing plate.

Further, the sealed compartment and the sealing element constitute an accommodating space, where each of the sealed compartment and the sealing element is provided with a water passage hole, such that the accommodating space is interconnected with the cavity and the outside, respectively.

The second driving unit is arranged in the accommodating space, and the second driving unit is connected to the water passage hole in the sealed compartment and the water passage hole in the sealing element, respectively, such that the liquid outside flows into the cavity under the action of the second driving unit or the water in the cavity drains out under the action of the second driving unit.

Further, a sealing structure is provided at a joint between the sealed compartment and the sealing element.

A sealing structure is provided at a joint between the second driving unit and the water passage hole.

A sealing structure is provided at a joint between the adjustment unit and the sealing element.

Further, a unidirectional valve or opening is provided within the cavity, and is configured for water drainage and/or gas exhaust to control quantity of the liquid fed into the cavity during position adjustment.

Further, the unidirectional valve or opening is positioned below an upper surface of the cavity. When the valve is submerged in the liquid, further injected liquid will drain out from the unidirectional valve or opening, and gas is preserved and sealed between a liquid level and the upper surface of the cavity.

The upper surface of the cavity is a face corresponding to a rising direction of the liquid level during injection of the liquid.

Further, the water storage tank shell is provided with a safety valve.

Further, a unidirectional valve or opening is provided within the cavity, and is configured for water drainage and/or gas exhaust to control quantity of the liquid fed into the cavity during position adjustment, and the unidirectional valve or opening is interconnected with installation space of the safety valve to facilitate pressure relief of the safety valve.

The safety valve is arranged above the unidirectional valve or opening.

Further, an accommodating groove is provided in the water storage tank shell extending into the cavity, where the accommodating groove is interconnected with the cavity. A safety valve cap is connected to the accommodating groove, and the safety valve is arranged in space constituted by the accommodating groove and the safety valve cap.

Further, a partition plate is provided within the cavity, such that the cavity is divided into at least two interconnected cavity parts.

When the volume of the cavity occupied by the gas decreases to a required value, a gas-liquid interface is positioned near the partition plate.

Further, the partition plate is fixedly or detachably connected to the water storage tank shell.

The partition plate is provided with a through hole, through which the divided cavity parts are interconnected with each other.

Further, at least one side of the partition plate is provided with a partition part to divide the cavity part on the corresponding side into at least two interconnected chambers.

Further, the partition part is arranged on a side close to a gas medium.

Further, a plurality of grilles are provided on at least one side of the partition plate extending toward the cavity.

Further, a unidirectional valve or opening is provided within the cavity, and is configured for water drainage and/or gas exhaust to control quantity of the liquid fed during buoyancy adjustment.

The partition plate is provided with an installation hole for cooperative installation with the unidirectional valve or opening arranged in the cavity.

Further, the pool cleaning robot also includes a signal transmission unit.

The signal transmission unit is arranged on the robot body or is connected to the robot body.

When the pool cleaning robot floats up to the water surface under the action of the buoyancy adjustment unit, the signal transmission unit is configured to interact with a control console for signal transmission.

Further, the signal transmission unit includes at least one of a wireless signal transceiver, an acoustical signal transceiver, and an optical signal transceiver.

The control console includes at least one of a mobile phone App, a remote controller, and a relay station.

A control method for the pool cleaning robot is provided to control the pool cleaning robot to float from the liquid-submerged surface to a liquid surface or to dive from the water surface to the liquid-submerged surface. The control method includes:
obtaining data or instructions of the pool cleaning robot to determine whether the pool cleaning robot needs to float up or dive down;
controlling the pool cleaning robot to float up or dive down; and/or
controlling the pool cleaning robot to move on the water surface after it floats up.

Further, obtaining the data or the instructions of the pool cleaning robot to determine whether the pool cleaning robot needs to float up or dive down includes:
obtaining status data of the pool cleaning robot, the status data being used for indicating a status of the pool cleaning robot;
determining that the pool cleaning robot needs to float up or dive down when the status data meet a preset condition; or
receiving an instruction instructing the pool cleaning robot to float up or dive down.

Further, obtaining the status data of the pool cleaning robot includes at least one of:
obtaining at least one of battery level parameters of the pool cleaning robot when the pool cleaning robot moves or stands still;
obtaining at least one of operational parameters of the pool cleaning robot when the pool cleaning robot moves or stands still;
obtaining at least one of time parameters of the pool cleaning robot when the pool cleaning robot moves or stands still;
obtaining at least one of cleaning parameters of the pool cleaning robot when the pool cleaning robot moves or stands still; and
obtaining at least one of warning parameters of the pool cleaning robot when the pool cleaning robot moves or stands still.

Further, determining that the pool cleaning robot needs to float up or dive down when the status data meet the preset condition includes any one of:
determining that the pool cleaning robot needs to float up or dive down when a battery level parameter of the pool cleaning robot exceeds a threshold range of the battery level parameter;
determining that the pool cleaning robot needs to float up or dive down when an operational parameter of the pool cleaning robot exceeds a threshold range of the operational parameter;
determining that the pool cleaning robot needs to float up or dive down when a time parameter of the pool cleaning robot exceeds a threshold range of the time parameter;
determining that the pool cleaning robot needs to float up or dive down when a cleaning parameter of the pool cleaning robot exceeds a threshold range of the cleaning parameter;
determining that the pool cleaning robot needs to float up or dive down when a warning parameter of the pool cleaning robot exceeds a threshold range of the warning parameter.

Further, the cleaning parameters include at least one of a cleaning frequency, a cleaning area, and cleaning time.

Further, controlling the weight of the pool cleaning robot includes: controlling the weight of the buoyancy adjustment unit of the pool cleaning robot to decrease or increase the weight of the pool cleaning robot, such that under the action of the buoyancy adjustment unit, the pool cleaning robot floats from the liquid-submerged surface to the water surface or dives from the water surface to the liquid-submerged surface.

Further, controlling the pool cleaning robot to move on the water surface after it floats up includes: controlling the first driving unit to operate to drive the pool cleaning robot to move on the water surface.

The pool cleaning robot in the present disclosure has a buoyancy adjustment unit. The buoyancy adjustment unit can store water to increase the weight of the pool cleaning robot, such that the pool cleaning robot dives down. The buoyancy adjustment unit also can drain the water to reduce the weight of the pool cleaning robot, such that the pool cleaning robot floats up. In this way, the pool cleaning robot can automatically float up or dive down. When the machine needs to float up to the water surface, the machine can automatically float without the need for manually searching for the machine and lifting the machine out of the water surface, thereby saving manual labor.

### BRIEF DESCRIPTION OF THE DRAWINGS

To describe the technical solutions of the embodiments of the present disclosure or those of the prior art more clearly, the accompanying drawings required for describing the embodiments or the prior art will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic structural diagram of a buoyancy adjustment unit according to an embodiment of the present disclosure;
FIG. 2 is a schematic structural diagram of a water storage tank shell according to an embodiment of the present disclosure;
FIG. 3 is a schematic structural diagram of a driving component according to an embodiment of the present disclosure;
FIG. 4 is a schematic structural diagram of the buoyancy adjustment unit from one angle according to an embodiment of the present disclosure;
FIG. 5 is a schematic structural diagram of the buoyancy adjustment unit from another angle according to an embodiment of the present disclosure;
FIG. 6 is a schematic structural diagram of a partition plate from one angle according to an embodiment of the present disclosure;
FIG. 7 is a schematic structural diagram of the partition plate from another angle according to an embodiment of the present disclosure;
FIG. 8 is a schematic cross-sectional view of the buoyancy adjustment unit according to an embodiment of the present disclosure;
FIG. 9 is a schematic diagram of the buoyancy adjustment unit installed on a pool cleaning robot according to an embodiment of the present disclosure;
FIG. 10 is a top view of an underwater cleaning machine according to an embodiment of the utility model;
FIG. 11 is a three-dimensional structural schematic diagram of an underwater cleaning machine according to an embodiment of the utility model (the buoyancy adjustment unit being positioned in the middle of the housing); and
FIG. 12 is a top view of the underwater cleaning machine according to an embodiment of the utility model (the buoyancy adjustment unit being positioned in the middle of the housing).

### DETAILED DESCRIPTION

Detailed description of the present disclosure will further be made with reference to the accompanying drawings and embodiments to make the objectives, technical solutions and advantages of the present disclosure more apparent. It should be understood that the embodiments described herein are merely used to explain the present disclosure, and are not intended to limit the present disclosure.

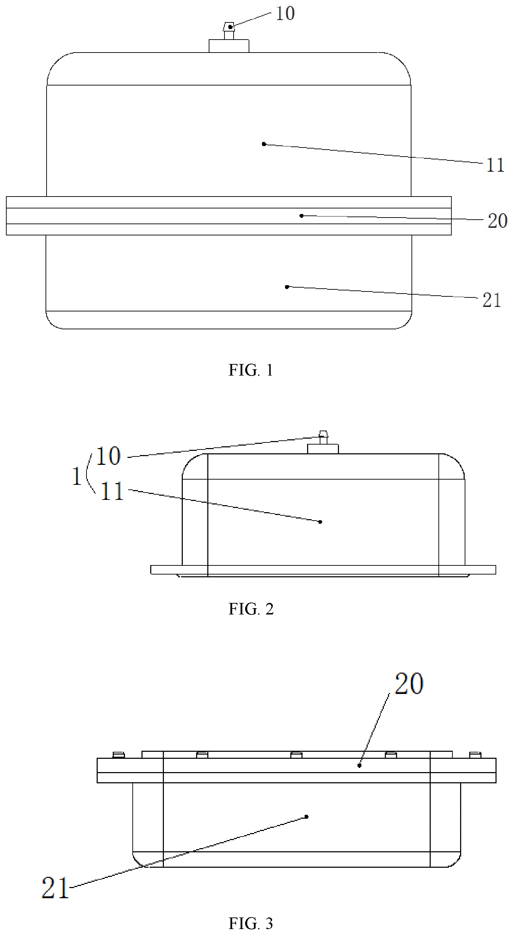

FIG. 1 shows a schematic structural diagram according to an embodiment of the present disclosure, where this embodiment relates to a pool cleaning robot and a control method therefor. The pool cleaning robot has a buoyancy adjustment unit. The buoyancy adjustment unit can store water to increase the weight of the pool cleaning robot, such that the pool cleaning robot dives down. The buoyancy adjustment unit also can drain the water to reduce the weight of the pool cleaning robot, such that the pool cleaning robot floats up. In this way, the pool cleaning robot can automatically float up or dive down. When the machine needs to float up to the water surface, the machine can automatically float without the need for manually searching for the machine and lifting the machine out of the water surface, thereby saving manual labor.

A pool cleaning robot includes a robot body, a buoyancy adjustment unit 3, and a first driving unit. The buoyancy adjustment unit 3 and the first driving unit are arranged on the robot body or connected to the robot body. The buoyancy adjustment unit 3 is provided to enable the pool cleaning robot to move back and forth between a water surface and a liquid-submerged surface. The buoyancy adjustment unit 3 can adjust the gravity of the pool cleaning robot, thereby controlling the relationship between the gravity and the buoyancy of the pool cleaning robot, to control the pool cleaning robot to travel back and forth between the water surface and the liquid-submerged surface. When the pool cleaning robot floats up to the water surface under the action of the buoyancy adjustment unit 3, the first driving unit is configured to drive the pool cleaning robot to move on the water surface.

The first driving unit includes a power part and a driving part, where the power part is configured to supply power to the driving part, and the driving part is configured to generate a driving force for the pool cleaning robot to drive the pool cleaning robot to move on the water surface.

The power part includes a motor, a connecting part, and a water propeller part. The motor transmits power to the water propeller part by means of the connecting part, and the motor is connected to the connecting part. The motor drives the connecting part to operate, the connecting part is connected to the driving part for power transmission. The connecting part transmits power from the motor to the driving part, such that the driving part generates a thrust force on the pool cleaning robot to drive the pool cleaning robot to move on the water surface.

The connecting part includes a driving wheel meshing with the water propeller part, where the driving wheel is installed on an output shaft of the motor. When the motor rotates, it drives the driving wheel to rotate. Through meshing transmission, the driving part is driven to operate.

The pool cleaning robot includes a travelling wheel, which rotates to drive the pool cleaning robot to travel. The water propeller part includes a rolling brush 5 and/or a caterpillar track 6. Under the action of the power part, the rolling brush 5 and/or the caterpillar track 6 are operated on the water surface or in water, such that protrusions on the rolling brush 5 and/or the caterpillar track 6 move on the water surface or in the water to generate a thrust force on the pool cleaning robot. The rolling brush 5 is provided with a rolling brush wheel directly or indirectly meshing with the driving wheel, where the rolling brush wheel is arranged at two ends of the rolling brush 5, and the rolling brush wheel may be directly meshed and connected to the driving wheel for power transmission, such that the driving wheel drives the rolling brush wheel to rotate, thereby driving the rolling brush 5 to rotate. Alternatively, the rolling brush wheel may also be meshed and connected to the driving wheel for power transmission through a plurality of gear transmission structures, and power is transmitted through the plurality of gear transmission structures, such that the driving wheel can drive the rolling brush wheel to rotate. The caterpillar track 6 is installed on the travelling wheel. Driven by the travelling wheel of the pool cleaning robot, the caterpillar track 6 is operated on the water surface to generate the thrust force on the pool cleaning robot to push the pool cleaning robot to travel on the water surface. The travelling wheel directly or indirectly meshes with the driving wheel. The travelling wheel may be directly meshed and connected to the driving wheel for power transmission to drive the travelling wheel to operate. Alternatively, the travelling wheel may also be meshed and connected to the driving wheel for power transmission through a plurality of gear transmission structures, and power is transmitted through the plurality of gear transmission structures, such that the travelling wheel is driven to operate.

The power part includes a motor and an impeller, where the motor is connected to the impeller, and the motor drives the impeller to rotate. When the pool cleaning robot is operated, it sucks sewage generated by scrubbing.

The driving part includes a water outlet 4, where the water outlet 4 is arranged on the housing of the pool cleaning robot and is formed by an opening of the housing, and the water outlet 4 corresponds to the impeller. Water sucked by the rotation of the impeller is filtered and then drains out from the water outlet 4. The water outlet 4 is inclined from the housing of the pool cleaning robot towards a rear end direction. A component of water drainage through the water outlet 4 in a horizontal direction generates the thrust force on the pool cleaning robot, to drive the pool cleaning robot to move on the water surface, where the horizontal direction refers to a direction of a plane where the water surface is located.

The robot body includes a housing 8 and a control unit connected to the housing 8, where the control unit is installed inside the housing 8. The buoyancy adjustment unit 3 is connected to the housing 8, and the buoyancy adjustment unit 3 may be positioned inside or outside the housing 8. The buoyancy adjustment unit 3 is electrically connected to the control unit, which controls the buoyancy adjustment unit 3 to operate. The first driving unit is electrically connected to the control unit, which controls the first driving unit to operate.

The housing 8 includes an upper housing and a lower housing, where the lower housing is provided with a water inlet, and the upper housing is located at a side opposite to the lower housing. When the impeller rotates, it sucks water through the water inlet. When the pool cleaning robot floats on the water surface, at least a portion of the upper housing is exposed above the water surface.

In some implementable embodiments, the water inlet is a water inlet of the pool cleaning robot.

An end of the pool cleaning robot along a traveling direction thereof is a front end of the housing 8, and the buoyancy adjustment unit 3 is arranged in a middle or at a rear end of the housing 8. The buoyancy adjustment unit 3 may be positioned in the middle of the housing 8, or the buoyancy adjustment unit 3 may be positioned at the rear end of the housing, or the buoyancy adjustment unit 3 may be positioned at any position between the middle and the rear end of the housing 8, or the buoyancy adjustment unit 3 may be positioned at any position between the front and the middle of the housing 8. The front end of the housing 8 includes an end of the pool cleaning robot first approaching the water surface when it climbs the pool wall to perform the cleaning task.

The pool cleaning robot travelling back and forth between the water surface and the liquid-submerged surface includes floating from the liquid-submerged surface to the water surface and/or diving from the water surface to the liquid-submerged surface. The pool cleaning robot floating from the liquid-submerged surface to the water surface includes floating from the liquid-submerged surface to the water surface and floating on the water surface.

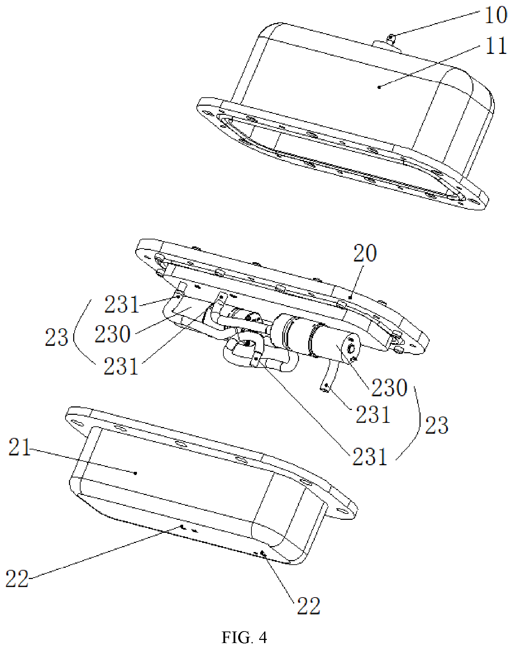

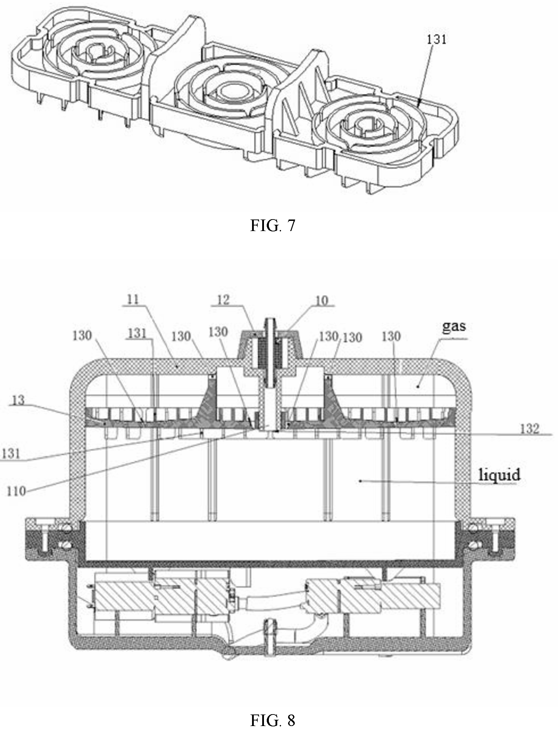

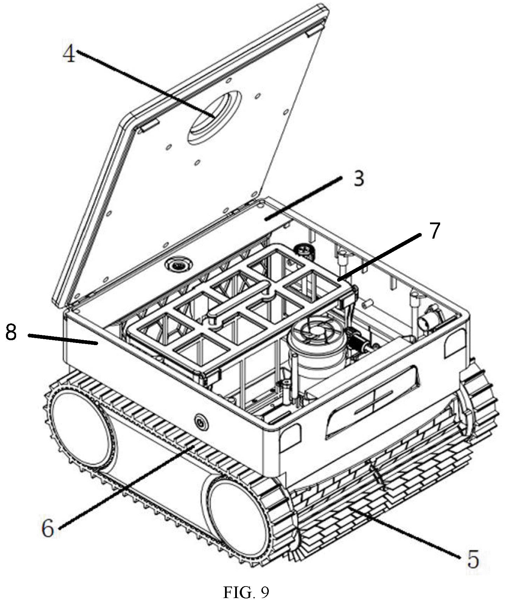

As shown in FIGS. 1 to 10, the buoyancy adjustment unit 3 includes an adjustment unit 1 and a second driving unit 2.

The adjustment unit 1 includes at least one cavity for injecting or discharging a liquid. Under the action of the second driving unit 2, the liquid flows into the cavity or the liquid drains out of the cavity, to compress or release air in the cavity, such that the volume of the space occupied by the gas in the cavity changes, which causes a change in the gravity of the buoyancy adjustment unit 3, thereby adjustment the relationship between the gravity and the buoyancy of the pool cleaning robot. The control unit controls the second driving unit 2 to start or stop operation.

A partition plate 13 is provided within the cavity, and has a plurality of through holes 130. The cavity is divided into at least two interconnected cavity parts, and the liquid or air in one cavity part is allowed to enter the other cavity part, to separate the space where the liquid is located from the space where the air is located. Positions of the plurality of through holes 130 can be selected according to actual needs. The plurality of through holes 130 may be symmetrically or asymmetrically arranged in the partition plate 13. As the liquid is injected, when the liquid level approaches the first water outlet 132, the partition plate 13 comes into contact with the liquid entering the cavity, which can slow down the sloshing of the liquid in the cavity during the operation of the pool cleaning robot, thereby ensuring the overall stability of the pool cleaning robot and the stability of its moving trajectory, and preventing deviation of the moving trajectory.

During the operation of the second driving unit 2, the volume of the cavity remains unchanged, and the cavity is a cavity having a fixed volume. By injection of the liquid, the volume of the air occupied in the cavity changes.

In some implementable embodiments, the partition plate 13 corresponds to the position of the liquid level when the liquid in the cavity has a maximum volume. By controlling the volume of the cavity storing the liquid, after the liquid enters the cavity, the air inside the cavity is compressed and enters the cavity through the through holes 130 in the partition plate 13. In this way, the air is separated from the liquid.

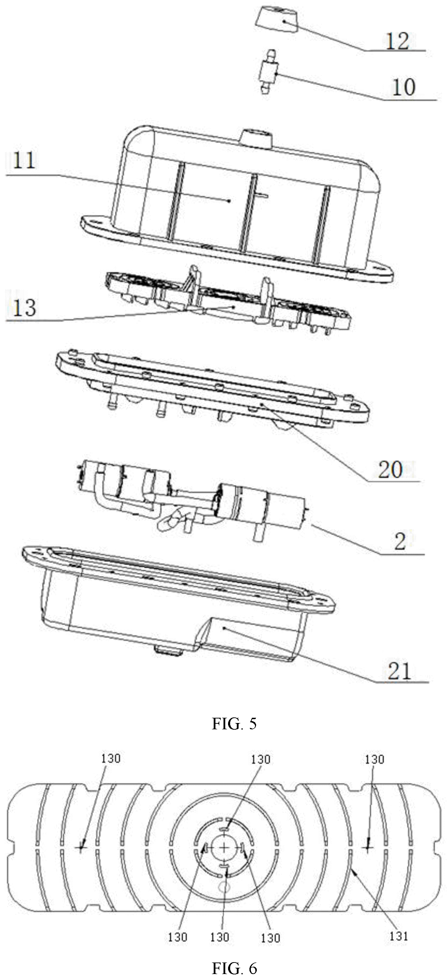

In some implementable embodiments, the partition plate is fixedly or detachably (for example, fixedly or detachably connected to the water storage tank shell) arranged inside the cavity. As shown in FIGS. 6-8, grilles 131 are provided on at least one side of the partition plate 13, and are at least arranged on and protrude from a side of the partition plate 13 facing the liquid. Arrangement of the grilles 131 can slow down the fluctuation of the liquid level and improve the stability of the buoyancy adjustment unit 3. Alternatively, the grilles 131 may be arranged on two sides of the partition plate 13, and positions of the grilles 131 can be selected according to actual needs, and no specific requirements are made here.

A plurality of grilles 131 are arranged in sequence along length and width directions of the partition plate 13, and are arranged on any side of the partition plate 13.

In some implementable embodiments, each grille 131 is a plate-shaped structure with a certain length, and is preferably arc-shaped. On one side of the partition plate 13, the plurality of grilles 131 are concentrically arranged in the middle position of the partition plate 13. Along a radial direction, multilayer grilles 131 are arranged. Along the length and width directions of the partition plate 13, the plurality of grilles 131 are arranged in sequence on two sides in the middle position of the partition plate 13. The plurality of grilles 131 may be arranged at equal intervals or at unequal intervals, which can be selected according to actual needs, and no specific requirements are made here. Preferably, along the width direction, the plurality of grilles 131 are positioned on one circular arc.

On the other side of the partition plate 13, the partition plate 13 is arranged as installation areas for the plurality of grilles 131. Within each installation area, the plurality of grilles 131 are concentrically arranged, and multilayer grilles 131 are arranged along the radial direction. The through holes 130 may be arranged between adjacent grilles 131.

A partition part is arranged between each two adjacent installation areas, and is a support plate protruding from the side of the partition plate 13. The height of the support plate is less than a distance between the side of the partition plate 13 and a side wall of the cavity, such that a free end of the support plate does not come into contact with the side wall of the cavity, and air in space corresponding to each installation area can circulate freely. The partition plate is provided with an installation hole for cooperative installation of the first water outlet 132.

In some implementable embodiments, the operations that cause the change of the volume of the space occupied by the gas in the cavity under the action of the second driving unit 2 includes: injecting the liquid into the cavity or draining the liquid from the cavity under the action of the second driving unit 2.

The buoyancy adjustment unit 3 includes a second driving unit 2, which includes a unidirectional water intake system and a unidirectional water drainage system. The unidirectional water intake system operates such that a liquid flows into the buoyancy adjustment unit 3 to increase the weight of the pool cleaning robot. The unidirectional water drainage system operates such that the liquid drains out of the buoyancy adjustment unit 3 to reduce the weight of the pool cleaning robot.

In some implementable embodiments, each of the unidirectional water intake system and the unidirectional water drainage system includes a pump and a unidirectional valve arranged on a water intake pipeline of the pump; or each of the unidirectional water intake system and the unidirectional water drainage system includes a unidirectional pump that can maintain pressure.

Specifically, each of the unidirectional water intake system and the unidirectional water drainage system includes at least one driving component 230 and at least two transmission parts. One driving component 230 and two transmission parts may constitute one driving structure 23, that is, each of the unidirectional water intake system and the unidirectional water drainage system is provided with at least one driving structure 23. Arrangement of the driving component 230 provides power to enable the flow of the liquid, and arrangement of the transmission part guides the flow of the liquid. At least one transmission part connects the driving component 230 to the cavity, to establish an interconnected channel between the driving component 230 and the cavity, and at least one transmission part connects the driving component 230 to outside, to establish an interconnected channel between the driving component 230 and the outside, such that the liquid outside flows along the transmission part, the driving component 230, and the transmission part, and enters the cavity or drains out of the cavity.

In some implementable embodiments, preferably, the outside includes a location where the liquid outside is.

In some implementable embodiments, preferably, the transmission part includes a channel or a conveying pipeline.

In some implementable embodiments, each of the unidirectional water intake system and the unidirectional water drainage system includes one driving component 230 and two transmission parts, i.e., a transmission part I and a transmission part II.

The transmission part I is connected to the driving component 230 and the cavity, and the transmission part II is connected to the driving component 230 and the outside. Under the action of the driving component 230, the liquid enters the cavity from the outside through the transmission part I and the transmission part II. Under the action of the driving component 230, the liquid drains out of the cavity to the outside through the transmission part II and the transmission part I.

The driving component 230 may be a unidirectional pump. Alternatively, the driving component 230 may be a pump, and a unidirectional valve is arranged on the transmission part I or the transmission part II.

In some implementable embodiments, the second driving unit includes two driving components 230, which correspond to the unidirectional water drainage system and the unidirectional water intake system, respectively. The two driving components 230 are a driving component I and a driving component II, respectively. Each of the two driving components 230 is connected to two transmission parts. A transmission part aI and a transmission part bI (constituting the unidirectional water intake system) are connected to the driving component I, and a transmission part aII and a transmission part bII (constituting the unidirectional water drainage system) are connected to the driving component II.

When there are two driving components 230, these two driving components 230 alternately operate, where one driving component 230 is used to transport the liquid (water) outside into the cavity, and the other driving component 230 is used to transport the liquid (water) in the cavity to the outside.

The transmission part aI is connected to the driving component I and the cavity, and the transmission part bI is connected to the driving component I and the outside. Under the action of the driving component I, the liquid enters the cavity from the outside through the transmission parts bI and aI (the unidirectional water intake system).

The transmission part aII is connected to the driving component II and the cavity, and the transmission part bII is connected to the driving component II and the outside. Under the action of the driving component II, the liquid drains out of the cavity to the outside through the transmission parts aII and bII (the unidirectional water drainage system).

The second driving unit 2 is arranged inside a sealed compartment 21, which protects the second driving unit 2 from damage caused by contact between the second driving unit 2 and the liquid. The sealed compartment 21 is connected to the adjustment unit 1 by means of a sealing element, and the sealed compartment 21 and the adjustment unit 1 are positioned on two sides of the sealing element, respectively.

In some implementable embodiments, the second driving unit 2 is arranged inside a sealed box, which is connected to the cavity of the adjustment unit through a pipeline. A joint between the pipeline and the sealed box/cavity is sealed.

In some implementable embodiments, preferably, the sealing element includes a sealing plate 20.

In some implementable embodiments, a sealing connection between the sealing element and other components may be surface sealing or line sealing.

After entering the cavity, the liquid is in the space between the sealing element and the partition plate 13. When the pool cleaning robot is not in a stationary state, the liquid level in the cavity may fluctuate. The sealed compartment 21 is connected to the sealing element to form an accommodating space. Each of the sealed compartment 21 and the sealing element is provided with a water passage hole 22, such that the accommodating space is interconnected with the cavity and the outside, respectively, which not only allows the transmission part to be interconnected with the cavity and the outside, but also facilitates the installation of the transmission part. The second driving unit 2 is arranged in the accommodating space, and the second driving unit 2 is connected to the water passage hole 22 in the sealed compartment 21 and the water passage hole 22 in the sealing element, respectively, such that the liquid outside enters the cavity under the action of the second driving unit 2 or that the water in the cavity drains out under the action of the second driving unit 2. The driving component 230 is installed in the accommodating space, where one end of one transmission part is connected to the driving component 230, the other end of this transmission part is connected to the water passage hole 22 in the sealing element; and one end of the other transmission part is connected to the driving component 230, and the other end of the other transmission part is connected to the water passage hole 22 in the sealed compartment 21.

A sealing structure is provided at the joint between the sealed compartment 21 and the sealing element, and forms a sealed space between the sealed compartment 21 and the sealing element to protect the second driving unit 2. Furthermore, a sealing structure is provided at the joint between the second driving unit 2 and the water passage hole 22. That is, the sealing structures are respectively arranged at the joint between the transmission part and the water passage hole 22 in the sealing element and at the joint between the transmission part and the water passage hole 22 in the sealed compartment 21, to prevent leakage of the liquid.

A unidirectional valve or opening is provided within the cavity, and is configured for water drainage and/or gas exhaust to control quantity of the liquid fed into the cavity during position adjustment. Further, the unidirectional valve or opening is positioned below an upper surface of the cavity. When the valve (the unidirectional valve or opening) is submerged in the liquid, further injected liquid will drain out from the unidirectional valve or opening, and gas is preserved and sealed between the liquid level and the upper surface of the cavity. The upper surface of the cavity is a face corresponding to a rising direction of the liquid level during injection of the liquid.

A water storage tank shell 11 of the adjustment unit 1 mentioned above is provided with a safety valve 10 to adjust the pressure inside the cavity. When the pressure inside the cavity is too high, the safety valve 10 is opened to release the pressure. The unidirectional valve or opening is interconnected with the installation space of the safety valve to facilitate pressure relief of the safety valve. The safety valve is arranged above the unidirectional valve or opening.

The water storage tank shell 11 (extending into the cavity) is provided with a first water outlet 132 (pressure relief port), and the first water outlet 132 is interconnected with the installation space of the safety valve to facilitate pressure relief of the safety valve. A water outlet channel 110 (pressure relief channel) is provided on an inner side wall of the cavity, where the water outlet channel 110 is formed by extending the inner side wall of the cavity toward the interior of the cavity. The water outlet channel 110 has a certain length, which is selected and set according to actual needs. A free end of the water outlet channel 110 corresponds to the first water outlet 132. The water outlet channel 110 extends inward from the water storage tank shell and is plugged into the first water outlet 132, such that a port where the water outlet channel 110 is interconnected with the cavity is the first water outlet 132. The position of the first water outlet 132 can ensure the height of the liquid level of the liquid in the cavity, thus ensuring the total quantity of the liquid entering the cavity. In this way, the liquid entering the cavity is quantitated to ensure that the buoyancy adjustment unit 3 provides a corresponding gravity value. Meanwhile, arrangement of the water outlet channel 110 limits the installation position of the partition plate 13 in the cavity. The partition plate 13 is provided with an installation hole for cooperative installation with the first water outlet 132 on a periphery of the water outlet channel 110 (in some implementable embodiments, the installation hole is installed in conjunction with the first water outlet 132), and the installation position of the partition plate 13 is determined during the installation of the partition plate 13. In some implementable embodiments, the partition plate 13 is detachably connected to the water storage tank shell 11.

On an outer side wall of the cavity (an outer side wall of a side shell concave into the cavity), an accommodating groove is provided at a position corresponding to the water outlet channel 110. The accommodating groove is interconnected with the water outlet channel 110, where a side wall of the accommodating groove is a surface of the outer side wall. The safety valve is installed in the accommodating groove, and one end of the safety valve extends partly into the water outlet channel 110. The safety valve is fixed on the water storage tank shell 11 (such as the accommodating groove) through a safety valve cap 12. The safety valve cap is hermetically connected to the safety valve, and the safety valve is hermetically connected to the water storage tank shell (such as the accommodating groove). The safety valve is arranged between the safety valve cap and the water storage tank shell 11. The safety valve may be connected in a detachably fixed manner, preferably by means of screw connection, to the water storage tank shell 11 through the safety valve cap. The safety valve cap is hermetically connected to the safety valve, and the safety valve is hermetically connected to the water storage tank shell 11. The safety valve cap 12 limits the safety valve, and the safety valve is installed in the accommodating groove to prevent it from falling out of the accommodating groove. The safety valve cap 12 may be detachably connected to the accommodating groove, which may be achieved by means of screw connection, plug connection, or other detachable connection according to actual demands, and no specific requirements are made here. During the buoyancy adjustment, for example, when the pool cleaning robot is controlled to dive down, the liquid is injected into the cavity, thus the volume of the gas in the cavity decreases and the pressure inside the cavity increases. When the liquid level rises to or above the height of the first water outlet 132 and the internal gas pressure is greater than the opening pressure of the safety valve, the safety valve is opened, such that the liquid drains out of the safety valve through the first water outlet 132, and the injection of the liquid is stopped. When the gas pressure inside the cavity is not greater than the opening pressure of the safety valve, the safety valve is closed. When the liquid drains out, the volume of the liquid in the cavity decreases and the volume of the gas increases. The gas pressure inside the cavity continues to decrease until the drainage of the liquid is stopped. Throughout the entire liquid drainage process, the safety valve is in a closed state.

The adjustment unit 1 includes the water storage tank shell 11, where the cavity is formed inside the water storage tank shell 11 to store the liquid and the gas. The second driving unit is connected to the water storage tank shell 11. Under the action of the second driving unit, the liquid is transported into the water storage tank shell 11, and thus the weight of the pool cleaning robot increases. As the liquid continues to be transported into the water storage tank shell 11, when the gravity of the pool cleaning robot is greater than the buoyancy thereof, the device dives down. Under the action of the second driving unit 2, the liquid in the water storage tank shell 11 drains out, thus the weight of the pool cleaning robot decreases. As the liquid in the water storage tank shell 11 continues to be drained, when the gravity of the pool cleaning robot is less than the buoyancy thereof, the device floats up.

The partition plate 13 is fixedly installed inside the water storage tank shell 11, to divide the space inside the water storage tank shell 11 into two spaces. The shape of the partition plate 13 is adapted to the internal cross-sectional shape of the water storage tank shell 11, such that the partition plate 13 can be installed inside the water storage tank shell 11. The partition plate 13 is fixedly connected to the water storage tank shell 11 by means of bolted connection, integrated molding or rivet connection or the like, which can be selected according to actual needs, and no specific requirements are made here.

The liquid may be water.

The pool cleaning robot also includes a filtering unit 7, which is arranged inside the housing 8. The water to be cleaned enters the filtering unit 7 through a water inlet, and flows out through a water outlet after being filtered by the filtering unit 7. The filtering unit 7 may be arranged adjacent to the buoyancy adjustment unit 3. In a preferred embodiment, the filtering unit 7 is detachably arranged inside the housing 8.

The control unit may be arranged inside the sealed box, which is arranged inside the housing 8. The sealed box protects the control unit from direct contact with the water, and the sealed box is detachably connected to the housing 8. The sealed box is arranged at an end of the housing 8 near the rolling brush 5.

In some implementable embodiments, the sealed box, the filtering unit 7, and the buoyancy adjustment unit 3 are arranged in sequence backwards along a front end of the pool cleaning robot. That is, the sealed box, the filtering unit 7, and the buoyancy adjustment unit 3 are arranged in sequence along a direction from the front end to a rear end of the pool cleaning robot.

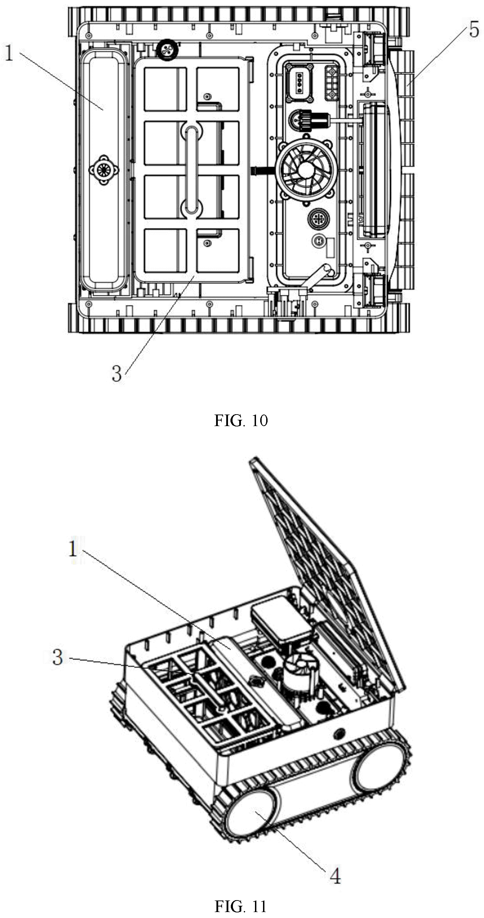

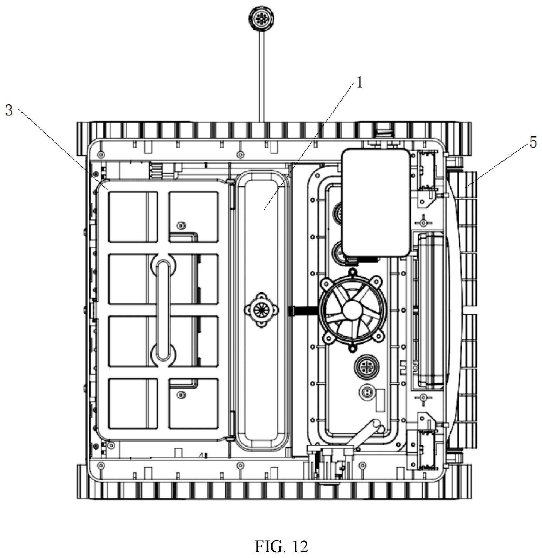

When the buoyancy adjustment unit 3 is arranged in the middle of the housing 8, as shown in FIGS. 11 and 12, the buoyancy adjustment unit 3 is positioned between the filtering unit 7 and the sealed box. The buoyancy adjustment unit 3 is detachably connected to the housing 8 to facilitate installation, disassembly and maintenance of the buoyancy adjustment unit 1.

The pool cleaning robot also includes a signal transmission unit for signal transmission. The signal transmission unit is arranged on the robot body or is connected to the robot body. When the pool cleaning robot floats up to the water surface under the action of the buoyancy adjustment unit 3, the signal transmission unit is configured to interact with a control console for signal transmission. The control unit receives a signal transmitted by the signal transmission unit, and controls, based on the received signal, the first driving unit and the second driving unit 2 to operate.

When the pool cleaning robot floats up to the water surface, the signal transmission unit is positioned near the water surface. In some implementable embodiments, when the pool cleaning robot floats up to the water surface, the signal transmission unit is positioned above or below the water surface.

The signal interaction between the signal transmission unit and the control console includes at least one of wireless signal interaction, acoustical signal interaction, and optical signal interaction. The control console transmits a signal to the signal transmission unit.

The signal transmission unit includes at least one of a wireless signal transceiver, an acoustical signal transceiver, and an optical signal transceiver, which can be selected according to actual needs, and no specific requirements are made here.

The control console includes at least one of a mobile phone App, a remote controller, and a relay station, which can be selected according to actual needs, and no specific requirements are made here.

Reference is made below using a specific embodiment.

A pool cleaning robot includes, as shown in FIGS. 1 to 8, a buoyancy adjustment unit 3, which includes:
an adjustment unit 1 comprising at least one cavity for storing water and gas;
a second driving unit 2 connected to the adjustment unit 1; wherein the second driving unit 2 is configured such that:
under the action of the second driving unit 2, water is transported into and stored in the cavity of the adjustment unit 1, the weight of the buoyancy adjustment unit 3 increases, and thus the pool cleaning robot dives down;
under the action of the second driving unit 2, the water in the cavity of the adjustment unit 1 drains out, the weight of the buoyancy adjustment unit 3 decreases, and thus the pool cleaning robot floats up.

When the pool cleaning robot needs to dive down, the second driving unit 2 operates to suck water outside into the cavity of the adjustment unit 1. The cavity of the adjustment unit 1 stores the water, so the weight of the buoyancy adjustment unit 3 increases, which in turn increases the weight of the pool cleaning robot and causes it to dive down automatically. When the pool cleaning robot needs to float up, the second driving unit 2 operates to drain the water in the cavity of the adjustment unit 1 to the outside, so the weight of the buoyancy adjustment unit 3 decreases, which in turn reduces the weight of the pool cleaning robot and causes it to automatically float up.

Specifically, outside the second driving unit 2, a sealing structure is provided to protect the second driving unit 2. The sealing structure includes a sealed compartment 21 and a sealing element connected to each other. The sealed compartment 21 and the sealing element constitute an accommodating space. Each of the sealed compartment 21 and the sealing element is provided with a water passage hole 22 to allow the accommodating space to be interconnected with the cavity of the adjustment unit 1 and the outside, respectively. The sealed compartment 21 is a box structure having a space inside and an opening at one end. The sealing element is a sealing plate 20 (which may be a plate-shaped structure or other structures), and the sealing plate 20 is installed at an open end of the sealed compartment 21. The sealed compartment 21 may be detachably connected to the sealing plate 20, which may be achieved by means of bolted connection, plug connection, threaded connection or other detachable connection according to actual demands, and no specific requirements are made here.

The sealing plate 20 is connected to the adjustment unit 1. The sealed compartment 21 and the adjustment unit 1 are positioned on two sides of the sealing plate 20, respectively. The adjustment unit 1 may be detachably connected to the sealing plate 20, which may be achieved by means of bolted connection, plug connection, threaded connection or other detachable connection according to actual demands, and no specific requirements are made here.

Arrangement of the water passage hole 22 in the sealing plate 20 enables the sealed compartment 21 to be interconnected with the cavity of the adjustment unit 1, such that the water outside can enter the cavity of the adjustment unit 1 through the water passage hole 22 and is stored in the cavity of the adjustment unit 1, and the water inside the adjustment unit 1 can also drain out through the water passage hole 22 in the sealing plate 20.

Arrangement of the water passage hole 22 in the sealed compartment 21 makes it easier to drain the water inside the cavity of the adjustment unit 1 through the water passage hole 22 in the sealing plate 20 and the water passage hole 22 in the sealed compartment 21, and makes it easier for the water outside to enter the cavity of the adjustment unit 1 through the water passage hole 22 in the sealed compartment 21 and the water passage hole 22 in the sealing plate 20.

The second driving unit 2 includes a unidirectional water intake system and a unidirectional water drainage system. Each of the unidirectional water intake system and the unidirectional water drainage system includes at least one driving structure 23. A plurality of driving structures 23 are arranged in the accommodating space constituted by the sealed compartment 21 and the sealing plate 20. The driving structure 23 is respectively connected to the water passage hole 22 in the sealed compartment 21 and the water passage hole 22 in the sealing plate 20, such that the water outside enters the cavity of the adjustment unit 1 under the action of the driving structure 23, or the water inside the cavity of the adjustment unit 1 drains out under the action of the driving structure 23. The driving structure 23 provides power to enable the flow of the water. The driving structure 23 may be installed inside the sealed compartment 21 or installed on the sealing plate 20, and an installation position thereof can be selected according to actual needs. The sealed compartment 21 and the sealing plate 20 protect the plurality of driving structures 23 from damage caused by contact between the plurality of driving structures 23 and the water outside.

The arrangement of the driving structure 23 enables the water passage hole 22 in the sealed compartment 21 to be interconnected with the water passage hole 22 in the sealing plate 20, thereby forming a passage. The water outside enters the cavity of the adjustment unit 1 through the water passage hole 22 in the sealed compartment 21, the driving structure 23, and the water passage hole 22 in the sealing plate 20. The water in the cavity of the adjustment unit 1 drains out to the outside through the water passage hole 22 in the sealing plate 20, the driving structure 23, and the water passage hole 22 in the sealed compartment 21. In this way, the weight of the buoyancy adjustment unit 3 is adjusted, such that the pool cleaning robot can automatically float up or dive down.

The driving structure 23 includes the driving component 230 and at least two transmission parts connected to the driving component 230. The plurality of transmission parts are configured such that the other ends of a group of transmission parts are connected to the water passage holes 22 in the sealed compartment 21, and the other ends of the other group of transmission parts are connected to the water passage holes 22 in the sealing plate 20. Under the action of the driving component 230, the water flows along the transmission parts, and enters the cavity of the adjustment unit 1 from the outside or drains out of the cavity of the adjustment unit 1.

In this embodiment, the transmission parts are water conveying pipes 231.

In this embodiment, the driving component 230 may be a water pump, and the water inlet and the water outlet (the water inlet and the water outlet of the buoyancy adjustment unit 3) are respectively connected to the water conveying pipes 231. Alternatively, the driving component 230 may also be a motor. In this case, an impeller is installed on an output shaft of the motor, and a water tank is provided at a joint between the two water conveying pipes 231, where the impeller is positioned inside the water tank. The motor drives the impeller to rotate, such that the water is sucked into the water tank and drains out of the water tank, thereby achieving flow of the water.

In some implementable embodiments, there may be one driving structure 23. Through forward and reverse drive of the driving component 230, the water outside enters the cavity of the adjustment unit 1 and the water inside the cavity drains out to the outside.

In this embodiment, preferably there are two driving components 230, one of which serves as the unidirectional water intake system and the other one serves as the unidirectional water drainage system. Each driving component 230 is connected to two water conveying pipes 231, i.e., a water inlet pipe and a water outlet pipe. The number of the water passage holes 22 in the sealing plate 20 is two, and the number of the water passage holes 22 in the sealed compartment 21 is also two. The water inlet pipe on one driving component 230 is connected to one water passage hole 22 in the sealed compartment 21, and the water outlet pipe is connected to one water passage hole 22 in the sealing plate 20. The driving structure 23 is used to suck the water outside into the cavity of the adjustment unit 1. Under the action of the driving component 230, the water outside flows along the water inlet pipe through the water passage hole 22 in the sealed compartment 21, and drains out through the water outlet pipe. The water enters the cavity of the adjustment unit 1 through the water passage hole 22 in the sealing plate 20, such that the cavity of the adjustment unit 1 stores the water. The water inlet pipe on the other driving component 230 is connected to the water passage hole 22 in the sealing plate 20, and the water outlet pipe is connected to the water passage hole 22 in the sealed compartment 21. This driving structure 23 is used for driving to discharge the water inside the cavity of the adjustment unit 1. The water inside the cavity of the adjustment unit 1 flows along the water inlet pipe through the water passage hole 22 in the sealing plate 20, flows out of the water outlet pipe, and drains out to the outside through the water passage hole 22 in the sealed compartment 21. The two driving structures 23 alternately operate to achieve water storage and drainage for the adjustment unit 1.

To protect the second driving unit 2, the accommodating space constituted by the sealed compartment 21 and the sealing plate 20 is a sealed space. At a joint between the sealed compartment 21 and the sealing plate 20, a sealing structure is provided for sealing, which may be a sealing ring or sealing adhesive.

To prevent water leakage at the joint between the water conveying pipe 231 and the water passage hole 22 when the water flows inside the water conveying pipe 231, the joint between the water conveying pipe 231 and the water passage hole 22 is sealed. At the joint between the water conveying pipe 231 and the water passage hole 22, a sealing structure is provided, which may be a sealing ring or sealing adhesive.

The adjustment unit 1 includes a water storage tank shell 11, a partition element arranged inside the water storage tank shell 11, a safety valve 10 arranged on the water storage tank shell 11, and a safety valve cap 12 connected to an outer side wall of the water storage tank shell 11. The water storage tank shell 11 is used for storing water, and the safety valve 10 is used for pressure relief. The water storage tank shell 11 is a box structure internally provided with at least one cavity for storing water, with one end open. The sealing plate 20 is installed at the open end of the water storage tank shell 11. to prevent water leakage at the joint between the sealing plate 20 and the water storage tank shell 11. A sealing structure is provided at the joint between the water storage tank shell 11 and the sealing plate 20, where the sealing structure may be a sealing ring or sealing adhesive.

The partition plate 13 is fixedly installed inside an internal cavity of the water storage tank shell 11, to divide the internal space of the water storage tank shell 11 into two spaces. The space between the partition plate 13 and the sealing plate 20 is used to store the water entering the water storage tank shell 11. An inner wall of the water storage tank shell 11 is provided with the first water outlet 132 extending inwards, and the partition plate 13 is fixedly connected to the inner wall of the water storage tank shell 11 through bolts or other connectors.

The safety valve 10 may be installed on a side wall of the water storage tank shell 11 opposite to the sealing plate 20, or the safety valve 10 may also be installed on a peripheral side wall, depending on actual needs. The safety valve 10 is installed in the accommodating groove formed by a shell wall of the water storage tank shell 11 dented inwards the cavity, and extends into the inside of the water storage tank shell 11. The safety valve 10 is used to control pressure inside the water storage tank shell 11. When the pressure inside the water storage tank shell 11 is too high, the safety valve 10 is opened to drain the water and release the pressure. In this way, it is avoidable that the pressure inside the water storage tank shell 11 is too high to prevent the water outside from entering the water storage tank shell 11, and it is also avoidable that the higher pressure inside the water storage tank shell 11 causes deformation or even damage to the water storage tank shell 11.

An accommodating groove is arranged on the outer side wall on the top of the water storage tank shell 11 in a protruding (or dented) manner, and the water outlet channel 110 is provided at a corresponding position on the inner wall of the water storage tank shell 11. The water outlet channel 110 is interconnected with the accommodating groove, the safety valve 10 is installed in the accommodating groove, and one end of the safety valve 10 extends into the water outlet channel 110. The safety valve cap 12 is fastened at the free end of the accommodating groove, and the safety valve cap 12 is connected to the accommodating groove by screw threads. The other end of the safety valve 10 passes through a through hole in the safety valve cap 12 and extends to the outside of the space constituted by the safety valve cap 12 and the accommodating groove. The safety valve is installed in the space constituted by the safety valve cap 12 and the accommodating groove.

In this embodiment, as a commercially available product, the safety valve 10 can be selected according to actual needs, and no specific requirements are made here. The joint between the safety valve and the water outlet channel 110 of the water storage tank shell 11 is sealed to prevent water leakage.

A pool cleaning robot includes a robot body, a control unit, and the buoyancy adjustment unit 3 as described above, where the robot body includes a housing 8. The buoyancy adjustment unit 3 is connected to the housing 8, the housing 8 is connected to the control unit, and the control unit is connected to the buoyancy adjustment unit 3. The control unit is electrically connected to the driving component 230, controls the action of the driving component 230, and supplies power to the driving component 230 to maintain continuous action of the driving component 230. The buoyancy adjustment unit 3 is detachably connected to the housing 8. The control unit includes a control panel, which is arranged inside the sealed box mechanically connected to the housing 8.

When the pool cleaning robot needs to be cleaned or maintained during operation, there is water stored in the water storage tank shell 11, so the pool cleaning robot needs to float up. The control unit controls one of the driving structures 23 to operate, and the driving component 230 operates, such that the water inside the water storage tank shell 11 enters the water inlet pipe of the driving component 230 through the water passage hole 22 in the sealing plate 20, flows along the water inlet pipe, and drains out to the outside through the water passage hole 22 in the sealed compartment 21. Consequently, the weight of the buoyancy adjustment unit 3 is reduced, so the weight of the entire pool cleaning robot is reduced. When the gravity of the pool cleaning robot is less than the buoyancy applied thereto, the pool cleaning robot automatically floats up.

After the pool cleaning robot is cleaned or maintained, it needs to dive down to the bottom of the pool for a cleaning task. The control unit controls the other driving structure 23 to operate, and the driving component 230 operates, such that the water outside enters the water inlet pipe of the driving component 230 through the water passage hole 22 in the sealed compartment 21, flows along the water inlet pipe, drains out through the water passage hole 22 in the sealing plate 20, and enters the water storage tank shell 11 for storage. Consequently, the weight of the buoyancy adjustment unit 3 is increased, so the weight of the entire pool cleaning robot is increased. When the gravity of the pool cleaning robot is greater than the buoyancy applied thereto, the pool cleaning robot automatically dives down. In this way, the pool cleaning robot can automatically float up or dive down.

A control method for a pool cleaning robot is provided to control the pool cleaning robot to float from the liquid-submerged surface to a liquid surface or to dive from the water surface to the liquid-submerged surface. The control method includes:
obtaining data or instructions of the pool cleaning robot to determine whether the pool cleaning robot needs to float up or dive down;
controlling the pool cleaning robot to float up or dive down; and/or
controlling the pool cleaning robot to move on the water surface after it floats up.

Floating up or diving down includes the pool cleaning robot moving back and forth between the liquid-submerged surface and the water surface.

Obtaining the data or instructions of the pool cleaning robot to determine whether the pool cleaning robot needs to float up or dive down includes:
obtaining status data of the pool cleaning robot, the status data being used for indicating a status of the pool cleaning robot;
determining that the pool cleaning robot needs to float up or dive down when the status data meet a preset condition; or
receiving an instruction instructing the pool cleaning robot to float up or dive down.

Obtaining the status data of the pool cleaning robot includes at least one of:
obtaining at least one of battery level parameters of the pool cleaning robot when the pool cleaning robot moves or stands still;
obtaining at least one of operational parameters of the pool cleaning robot when the pool cleaning robot moves or stands still;
obtaining at least one of time parameters of the pool cleaning robot when the pool cleaning robot moves or stands still;
obtaining at least one of cleaning parameters of the pool cleaning robot when the pool cleaning robot moves or stands still; and
obtaining at least one of warning parameters of the pool cleaning robot when the pool cleaning robot moves or stands still.

Determining that the pool cleaning robot needs to float up or dive down when the status data meet the preset condition includes any one of:
determining that the pool cleaning robot needs to float up or dive down when a battery level parameter of the pool cleaning robot exceeds a threshold range of the battery level parameter;
determining that the pool cleaning robot needs to float up or dive down when an operational parameter of the pool cleaning robot exceeds a threshold range of the operational parameter;
determining that the pool cleaning robot needs to float up or dive down when a time parameter of the pool cleaning robot exceeds a threshold range of the time parameter;
determining that the pool cleaning robot needs to float up or dive down when a cleaning parameter of the pool cleaning robot exceeds a threshold range of the cleaning parameter;
determining that the pool cleaning robot needs to float up or dive down when a warning parameter of the pool cleaning robot exceeds a threshold range of the warning parameter.

The cleaning parameters include at least one of a cleaning frequency, a cleaning area, and cleaning time.

Controlling the pool cleaning robot to float up or dive down includes:
controlling the weight of the pool cleaning robot to decrease or increase the weight thereof.

Controlling the weight of the pool cleaning robot includes: controlling the weight of the buoyancy adjustment unit 3 of the pool cleaning robot to decrease or increase the weight of the pool cleaning robot, such that under the action of the buoyancy adjustment unit 3, the pool cleaning robot floats from the liquid-submerged surface to the water surface or dives from the water surface to the liquid-submerged surface.

Controlling the pool cleaning robot to move on the water surface after it floats up includes: issuing the instructions by the control unit, such that the first driving unit operates to drive the pool cleaning robot to move on the water surface.

Specifically, regarding the floating up or diving down of the pool cleaning robot, the control method for the pool cleaning robot may be divided into two phases as below.

In the first phase, the data/instructions are obtained. Specifically, when the pool cleaning robot receives the instructions for floating up or diving down, the control unit issues the instructions, such that the second driving unit 2 of the buoyancy adjustment unit 3 operates to inject the liquid into the cavity or drains the liquid from the cavity to the outside, causing the pool cleaning robot to float up or dive down. The instructions for floating up or diving down may include remote control, such as mobile phone App control or remote control handle. When a user wants the machine to float up or dive down, the users may issue the instructions to the pool cleaning robot by means of remote control, such that the pool cleaning robot floats up or dives down.

The above phase may also include: obtaining, by the control unit, the data from the pool cleaning robot, and determining whether the pool cleaning robot needs to float up or dive down based on the obtained data.

Specifically, when the pool cleaning robot has run out of battery or has low battery or needs to be charged, the battery level parameter of the pool cleaning robot transmitted to the control unit exceeds the threshold range of the battery level parameter. In this case, it is determined that the pool cleaning robot needs to float up or dive down.

When the operation of the pool cleaning robot goes wrong, for example, the pool cleaning robot gets stuck or needs to change its operating mode, the operational parameter transmitted to the control unit exceeds the threshold range of the operational parameter. In this case, it is determined that the pool cleaning robot needs to float up or dive down.

When the time parameter of the pool cleaning robot transmitted to the control unit exceeds the threshold range of the time parameter, it is determined that the pool cleaning robot needs to float up or dive down.

When the pool cleaning robot issues a warning or the warning parameter transmitted to the control unit exceeds the threshold range, it is determined that the pool cleaning robot needs to float up or dive down.

In the second phase 2, the pool cleaning robot is controlled to float up or dive down. Specifically, controlling the weight of the pool cleaning robot includes: controlling the weight of the buoyancy adjustment unit 3 of the pool cleaning robot to decrease or increase the weight of the pool cleaning robot. The buoyancy adjustment unit 3 is used to drive the pool cleaning robot to float from the liquid-submerged surface to the water surface or dive from the water surface to the liquid-submerged surface.

According to the above technical solutions, the buoyancy adjustment unit has the adjustment unit provided with at least one cavity. Under the action of the second driving unit, volume change of gas in the cavity is adjusted, to adjust the gravity of the buoyancy adjustment unit. In this way, the pool cleaning robot is controlled to float up or dive down.

The adjustment unit has the water storage tank shell 11, which has at least one cavity for storing water. The safety valve is arranged on the water storage tank shell 11 to control the pressure inside the water storage tank shell 11, which not only can prevent the excessive pressure inside the water storage tank shell 11 from causing deformation or damage to the water storage tank shell 11, but also can ensure that the water can enter the water storage tank shell 11.

The second driving unit 3 has a plurality of driving structures, the sealed compartment, and the sealing plate. The sealed compartment and the sealing plate constitute one sealed accommodating space, and the plurality of driving structures are arranged in the sealed accommodating space. The sealed compartment and the sealing plate protect the driving structures from damage caused by contact between the driving structures and the water.

The plurality of driving structures are provided and alternately operate, which not only can suck the water outside into the water storage tank shell, but also can drain the water from the water storage tank shell 11 to the outside. The driving structure has the driving component and the water conveying pipes, where the water conveying pipes are respectively connected to the water passage hole in the sealed compartment and the water passage hole in the sealing plate. The driving component operates, such that the water outside flows along the water conveying pipes and enters the water storage tank shell 11, or the water in the water storage tank shell 11 flows along the water conveying pipes and drains to the outside. In consequence, the weight of the buoyancy adjustment unit 3 is adjusted, thereby the weight of the pool cleaning robot is adjusted. In this way, based on the relationship between the gravity of the pool cleaning robot and the buoyancy applied thereto, the pool cleaning robot automatically floats up or dives down. When the machine needs cleaning or maintenance, the machine floats up to the water surface without the need for manually searching for the machine and lifting it out of the water surface, thereby reducing manual labor, lowering labor costs, improving operating efficiency, and improving degree of automation.

The same or similar reference numbers in the accompanying drawings of this embodiment correspond to the same or similar components. In the description of the present disclosure, it should be understood that if there are terms such as "up", "down", "left", "right" indicating orientation or positional relationships based on the orientation or positional relationships shown in the accompanying drawings, it is only for the convenience of describing the present disclosure and simplifying the description, and does not indicate or imply that the device or component referred to must have a specific orientation, be constructed and operated in a specific orientation. Therefore, the language used to describe the positional relationships in the accompanying drawings is only for illustrative purposes and cannot be understood as a limitation of this patent. For those ordinarily skilled in the art, the specific meanings of the terms may be understood according to specific situations.

The embodiments set forth above are only illustrated as preferred embodiments of the present disclosure, and are not intended to limit the present disclosure. All modifications, equivalent substitutions and improvements made within the spirit and principles of the present disclosure shall fall within the protection scope of the present disclosure.

## Claims

1. A pool cleaning robot comprising a robot body, a buoyancy adjustment unit, and a first driving unit, wherein
the buoyancy adjustment unit and the first driving unit are arranged on the robot body or connected to the robot body;
the buoyancy adjustment unit is provided to enable the pool cleaning robot to move back and forth between a water surface and a liquid-submerged surface;
when the pool cleaning robot floats up to the water surface under an action of the buoyancy adjustment unit, the first driving unit is configured to drive the pool cleaning robot to move on the water surface.

2. The pool cleaning robot according to claim 1, wherein the buoyancy adjustment unit comprises a second driving unit, which comprises a unidirectional water intake system and a unidirectional water drainage system, the unidirectional water intake system operates such that a liquid flows into the buoyancy adjustment unit to increase a weight of the pool cleaning robot, and the unidirectional water drainage system operates such that the liquid drains out of the buoyancy adjustment unit to reduce the weight of the pool cleaning robot.

3. The pool cleaning robot according to claim 2, wherein the unidirectional water intake system and the unidirectional water drainage system are separately selected from any one of:
(1) a pump and a unidirectional valve arranged on a water intake/drainage pipeline of the pump;
(2) the unidirectional pump.

4. The pool cleaning robot according to claim 1, wherein the first driving unit comprises a power part and a driving part, the power part is configured to supply power to the driving part, and the driving part is configured to generate a driving force for the pool cleaning robot to drive the pool cleaning robot to move on the water surface.

5. The pool cleaning robot according to claim 4, wherein the power part comprises a motor, a connecting part, and a water propeller part, the motor being configured to transmit power to the water propeller part by means of the connecting part.

6. The pool cleaning robot according to claim 5, wherein the water propeller part comprises a rolling brush and/or a caterpillar track; under an action of the power part, the rolling brush and/or the caterpillar track are operated on the water surface or in water, such that a protrusion on the rolling brush and/or the caterpillar track moves on the water surface or in the water to generate a thrust force on the pool cleaning robot.

7. The pool cleaning robot according to claim 6, wherein the connecting part comprises a driving wheel installed on an output shaft of the motor;
the rolling brush is provided with a rolling brush wheel directly or indirectly meshing with the driving wheel;
driven by a travelling wheel of the pool cleaning robot, the caterpillar track is operated on the water surface to generate the thrust force on the pool cleaning robot, and the travelling wheel directly or indirectly meshes with the driving wheel.

8. The pool cleaning robot according to claim 4, wherein the power part comprises a motor and an impeller connected to the motor, and the driving part comprises a water outlet; the motor drives the impeller to operate, such that water drains out through the water outlet;
a component of water drainage through the water outlet in a horizontal direction generates a thrust force on the pool cleaning robot, to drive the pool cleaning robot to move on the water surface, wherein the horizontal direction refers to a direction of a plane where the water surface is located.

9. The pool cleaning robot according to claim 2, wherein the robot body comprises a housing and a control unit connected to the housing;
the buoyancy adjustment unit is connected to the housing, and the buoyancy adjustment unit is electrically connected to the control unit;
the first driving unit is electrically connected to the control unit.

10. The pool cleaning robot according to claim 9, wherein the housing comprises an upper housing and a lower housing, the lower housing is provided with a water inlet, and the upper housing is located at a side opposite to the lower housing; when the pool cleaning robot floats on the water surface, at least a portion of the upper housing is exposed above the water surface; and the water inlet is a water inlet of the pool cleaning robot.

11. The pool cleaning robot according to claim 9, wherein an end of the pool cleaning robot along a traveling direction thereof is a front end of the housing, and the buoyancy adjustment unit is arranged in a middle or at a rear end of the housing.

12. The pool cleaning robot according to claim 9, wherein the buoyancy adjustment unit comprises an adjustment unit comprising a water storage tank shell, and a cavity is formed inside the water storage tank shell;
under an action of the second driving unit, volume of space occupied by gas and/or liquid in the cavity changes, causing the pool cleaning robot to move back and forth between the water surface and the liquid-submerged surface;
volume of the cavity remains unchanged.

13. The pool cleaning robot according to claim 12, wherein changing of the volume of the space occupied by the gas and/or the liquid in the cavity under the action of the second driving unit comprises any one or two of following cases where:
under the action of the second driving unit, the liquid is injected into the cavity, such that the volume of the space occupied by the gas decreases, the weight of the buoyancy adjustment unit increases, and thus the pool cleaning robot dives down to the liquid-submerged surface; and
the liquid drains out of the cavity, such that the volume of the space occupied by the gas increases, the weight of the buoyancy adjustment unit decreases, and thus the pool cleaning robot floats up to the water surface.

14. The pool cleaning robot according to claim 12, wherein each of the unidirectional water intake system and the unidirectional water drainage system comprises at least one driving component and at least two transmission parts;
at least one transmission part of the at least two transmission parts connects the driving component to the cavity;
at least one transmission part connects the driving component to outside.

15. The pool cleaning robot according to any one of claims 12 to 14, wherein the second driving unit is arranged in a sealed compartment, and the sealed compartment is hermetically connected to the adjustment unit by means of a sealing element; or
the second driving unit is arranged inside a sealed box and is connected to the cavity of the adjustment unit through a pipeline, and a sealing structure is provided at a joint of the pipeline.

16. The pool cleaning robot according to claim 15, wherein the sealing element comprises a sealing plate.

17. The pool cleaning robot according to claim 15, wherein
the sealed compartment and the sealing element constitute an accommodating space, and each of the sealed compartment and the sealing element is provided with a water passage hole, such that the accommodating space is interconnected with the cavity and the outside, respectively;
the second driving unit is arranged in the accommodating space, and the second driving unit is connected to the water passage hole in the sealed compartment and the water passage hole in the sealing element, respectively, such that the liquid outside flows into the cavity under the action of the second driving unit or water in the cavity drains out under the action of the second driving unit.

18. The pool cleaning robot according to claim 17, wherein a sealing structure is provided at a joint between the sealed compartment and the sealing element;
a sealing structure is provided at a joint between the second driving unit and the water passage hole;
a sealing structure is provided at a joint between the adjustment unit and the sealing element.

19. The pool cleaning robot according to claim 12, wherein a unidirectional valve or opening is provided within the cavity, and is configured for water drainage and/or gas exhaust to control quantity of the liquid fed into the cavity during position adjustment.

20. The pool cleaning robot according to claim 19, wherein the unidirectional valve or opening is positioned below an upper surface of the cavity, and when the valve is submerged in the liquid, further injected liquid will drain out from the unidirectional valve or opening, and gas is preserved and sealed between a liquid level and the upper surface of the cavity;
the upper surface of the cavity is a face corresponding to a rising direction of the liquid level during injection of the liquid.

21. The pool cleaning robot according to claim 12, wherein the water storage tank shell is provided with a safety valve.

22. The pool cleaning robot according to claim 21, wherein a unidirectional valve or opening is provided within the cavity, and is configured for water drainage and/or gas exhaust to control quantity of the liquid fed into the cavity during position adjustment, and the unidirectional valve or opening is interconnected with installation space of the safety valve to facilitate pressure relief of the safety valve;
the safety valve is arranged above the unidirectional valve or opening.

23. The pool cleaning robot according to claim 21, wherein an accommodating groove is provided in the water storage tank shell extending into the cavity, the accommodating groove is interconnected with the cavity, a safety valve cap is connected to the accommodating groove, and the safety valve is arranged in space constituted by the accommodating groove and the safety valve cap.

24. The pool cleaning robot according to claim 12, wherein a partition plate is provided within the cavity, such that the cavity is divided into at least two interconnected cavity parts;
when the volume of the cavity occupied by the gas decreases to a required value, a gas-liquid interface is positioned near the partition plate.

25. The pool cleaning robot according to claim 24, wherein the partition plate is fixedly or detachably connected to the water storage tank shell;
the partition plate is provided with a through hole, through which the divided cavity parts are interconnected with each other.

26. The pool cleaning robot according to claim 24, wherein at least one side of the partition plate is provided with a partition part to divide the cavity part on the corresponding side into at least two interconnected chambers.

27. The pool cleaning robot according to claim 26, wherein the partition part is arranged on a side close to a gas medium.

28. The pool cleaning robot according to claim 26, wherein a plurality of grilles are provided on at least one side of the partition plate extending toward the cavity.

29. The pool cleaning robot according to claim 24, wherein a unidirectional valve or opening is provided within the cavity, and is configured for water drainage and/or gas exhaust to control quantity of the liquid fed during buoyancy adjustment;
the partition plate is provided with an installation hole for cooperative installation with the unidirectional valve or opening arranged in the cavity.

30. The pool cleaning robot according to claim 1, further comprising a signal transmission unit, wherein
the signal transmission unit is arranged on the robot body or is connected to the robot body;
when the pool cleaning robot floats up to the water surface under the action of the buoyancy adjustment unit, the signal transmission unit is configured to interact with a control console for signal transmission.

31. The pool cleaning robot according to claim 30, wherein the signal transmission unit comprises at least one of a wireless signal transceiver, an acoustical signal transceiver, and an optical signal transceiver; and the control console comprises at least one of a mobile phone App, a remote controller, and a relay station.

32. A control method for the pool cleaning robot according to any one of claims 1 to 31, wherein controlling the pool cleaning robot to float from the liquid-submerged surface to a liquid surface or to dive from the water surface to the liquid-submerged surface comprises:
obtaining data or instructions of the pool cleaning robot to determine whether the pool cleaning robot needs to float up or dive down;
controlling the pool cleaning robot to float up or dive down; and/or
controlling the pool cleaning robot to move on the water surface after it floats up.

33. The control method for the pool cleaning robot according to claim 32, wherein obtaining the data or the instructions of the pool cleaning robot to determine whether the pool cleaning robot needs to float up or dive down comprises:
obtaining status data of the pool cleaning robot, the status data being used for indicating a status of the pool cleaning robot;
determining that the pool cleaning robot needs to float up or dive down when the status data meet a preset condition; or
receiving an instruction instructing the pool cleaning robot to float up or dive down.

34. The control method for the pool cleaning robot according to claim 33, wherein obtaining the status data of the pool cleaning robot comprises at least one of:
obtaining at least one of battery level parameters of the pool cleaning robot when the pool cleaning robot moves or stands still;
obtaining at least one of operational parameters of the pool cleaning robot when the pool cleaning robot moves or stands still;
obtaining at least one of time parameters of the pool cleaning robot when the pool cleaning robot moves or stands still;
obtaining at least one of cleaning parameters of the pool cleaning robot when the pool cleaning robot moves or stands still;
obtaining at least one of warning parameters of the pool cleaning robot when the pool cleaning robot moves or stands still.

35. The control method for the pool cleaning robot according to claim 33, wherein determining that the pool cleaning robot needs to float up or dive down when the status data meet the preset condition comprises any one of:
determining that the pool cleaning robot needs to float up or dive down when a battery level parameter of the pool cleaning robot exceeds a threshold range of the battery level parameter;
determining that the pool cleaning robot needs to float up or dive down when an operational parameter of the pool cleaning robot exceeds a threshold range of the operational parameter;
determining that the pool cleaning robot needs to float up or dive down when a time parameter of the pool cleaning robot exceeds a threshold range of the time parameter;
determining that the pool cleaning robot needs to float up or dive down when a cleaning parameter of the pool cleaning robot exceeds a threshold range of the cleaning parameter;
determining that the pool cleaning robot needs to float up or dive down when a warning parameter of the pool cleaning robot exceeds a threshold range of the warning parameter.

36. The control method for the pool cleaning robot according to claim 34, wherein the cleaning parameters comprise at least one of a cleaning frequency, a cleaning area, and cleaning time.

37. The control method for the pool cleaning robot according to claim 32, wherein controlling a weight of the pool cleaning robot comprises controlling a weight of the buoyancy adjustment unit of the pool cleaning robot to decrease or increase the weight of the pool cleaning robot, such that under the action of the buoyancy adjustment unit, the pool cleaning robot floats from the liquid-submerged surface to the water surface or dives from the water surface to the liquid-submerged surface.

38. The control method for the pool cleaning robot according to claim 32, wherein controlling the pool cleaning robot to move on the water surface after it floats up comprises: controlling the first driving unit to operate to drive the pool cleaning robot to move on the water surface.
